# EUROPÄISCHE PATENTANMELDUNG

(11) **EP 1 953 198 A2**
(43) Veröffentlichungstag der Anmeldung: **06.08.2008**
(21) Anmeldenummer: 07023339.0
(22) Anmeldetag: 03.12.2007
(51) Int. Cl.: C09C 1/64, C01B 13/32, C01F 7/02, C01F 7/30, C08K 3/22

(54) **Anorganische Metalloxid-Nanopartikel und Metalloxid-Nanopartikel enthaltende polymere Komposite**

(30) Priorität: 13.12.2006 DE 102006059216
(71) Anmelder: Institut für Oberflächenmodifizierung e.V., 04315 Leipzig (DE)
(72) Erfinder: Gläsel, Hans-Jürgen, Dr., 04229 Leipzig (DE); Hartmann, Eberhard, Dr., 04509 Krostitz, OT Priester (DE); Wennrich, Luise, Dr., 04827 Gerichtshain (DE); Buchmeiser, Michael R., Prof. Dr., 04318 Leipzig (DE); Hallmeier, Karl-Heinz, Dr., 04205 Leipzig (DE); Thieroff, Christoph, Dipl.-Ing., 06264 Kötschlitz (DE)
(74) Vertreter: Müller, Volkmar

(57) **Zusammenfassung**

Anorganische Metalloxid-Nanopartikel und Metalloxid-Nanopartikel enthaltende polymere Komposite

Die Erfindung betrifft anorganische Metalloxid- und Metallmischoxid-Nanopulver mit der Zusammensetzung

**MeᵢOⱼ**

Mit i = 1-3 und j = 1 - 7;
wobei die Metallatome Me den ersten fünf Hauptgruppen, den acht Nebengruppen oder den Lanthanoiden entstammen.

## Beschreibung

Die Erfindung betrifft anorganische Metalloxid- und Metallmischoxid-Nanopulver mit der Zusammensetzung

**MeᵢOⱼ**

Mit i = 1-3 und j = 1 - 7;
wobei die Metallatome Me den ersten fünf Hauptgruppen, den acht Nebengruppen oder den Lanthanoiden entstammen.
Besonders bevorzugt sind Metallatome Me, die aufgrund ihres Vorkommens kostengünstig sind und keine bzw. nur geringe Toxizität aufweisen (wie z.B. Al).

Im Patent DE 102005032353 (weiter P1genannt) werden metallorganische Nanopulver, diese Nanopulver enthaltende metallorganische Nanodispersionen und polymere metallorganische Nanokomposite beschrieben, die gegenüber dem damaligen Stand der Technik stark verbesserte rheologische Eigenschaften (Nanodispersionen) und oberflächenmechanische sowie viskoelastische Eigenschaften (Nanokomposite) aufwiesen. Ausgeprägte synergetische Effekte bezüglich der oberflächenmechanischen und viskoelastischen Eigenschaften sind durch den zusätzlichen Einsatz von Mikropartikeln (Korund) bei den entsprechenden Nano/Mikro-Hybridsystemen (vor allem in Kombination mit Nachkondensationsreaktionen zwischen den Oberflächenbereichen der Partikel und einer vorgebildeten Polysiloxanhülle sowie innerhalb der Polysiloxanhülle selbst) zu verzeichnen. Diese Nanopulver, diese Nano/(Mikro)-Dispersionen und diese Nano/(Mikro)-Komposite lassen sich in der industriellen Massenproduktion effektiv herstellen.

Weiterhin wird in P1 ein Verfahren zur Herstellung solcher metallorganischer Nanopulver, ein Verfahren zur Herstellung diesbezüglicher metallorganischer Nanodispersionen und ein Verfahren zur Herstellung polymerer metallorganischer Komposite offenbart.

Jedoch wird selbst im Falle der effizientesten Kompositsysteme in Taber/Abraser-Untersuchungen unter der Verwendung von Schmirgelpapier S-42 ein Abrieb von 40 mg nach 1000 Umdrehungen der rotierenden Prüfscheibe nicht unterschritten. Des weiteren übersteigt die Diamantritzhärte in keinem Falle einen Wert von 4.0 N und eine Erhöhung des Speichermoduls E' über 4.0 GPa ist bei Raumtemperatur nicht zu verzeichnen.

Aufgabe der Erfindung ist es, ein Metalloxid-Nanopulver bereit zu stellen, das in polymeren Kompositen zumindest bezüglich Abrieb, der Diamantritzhärte, des Speichermoduls sowie der Glasübergangstemperatur weiter verbesserte Eigenschaften bewirkt.

Das Nanopulver soll sich in der industriellen Massenproduktion effektiv herstellen lassen.

Weiterhin ist es Aufgabe der Erfindung ein Verfahren zur Herstellung eines solchen Metalloxid-Nanopulvers zu offenbaren.
Die Aufgabe der Erfindung bezüglich eines solchen Metalloxid-Nanopulvers wird durch die Merkmale des Anspruches 1 gelöst.

Erfindungswesentlich ist, dass das anorganische Metalloxid- und Metallmischoxid-Nanopulver eine sphärische Partikelmorphologie und eine Zusammensetzung

**MeᵢOⱼ**

mit i = 1-3 und j = 1 - 7;
wobei die Metallatome Me den ersten fünf Hauptgruppen, den acht Nebengruppen oder den Lanthanoiden entstammen, besitzt.

Eine sphärische Partikelmorphologie ist im Sinne insbesondere durch abgerundete Teilchenoberflächen ohne Kristallit-Kanten charakterisiert, wobei diese sphärische Partikelmorphologie ausgehend vom Ausgangszustand im erfindungsgemäßen Präparationsverfahren erhalten bleibt.

Die Metalloxid-Nanopulver und Metallmischoxid-Nanopulver werden aus den metallorganischen Nanopartikeln mit sphärischer Partikelmorphologie und der Zusammensetzung

**MeᵢOⱼ(OH)ₖ[(OOC)ₗ-Rₘ]ₙ**

mit i=1-20, j=0-40, k=0-80, 1=1-80, m=1-80, n=0-80;
wobei die Metallatome Me den ersten fünf Hauptgruppen, den acht Nebengruppen oder den Lanthanoiden entstammen,
R Wasserstoffatome und/oder beliebige organische Reste sind und
diese Wasserstoffatome und/oder diese organischen Reste miteinander kombinierbar sind, wobei im Partikelkern und an der Partikeloberfläche des Nanopulvers Liganden (OOC)ₗ-Rₘ vorhanden sind und

im Partikelkern und an der Partikeloberfläche das Molverhältnis Me :
(OOC)ₗ-Rₘ) im Bereich von 20 : 1 bis 1 : 4 liegt,
durch pyrolytische Prozesse erhalten. Die Pyrolyse kann sowohl in fester Phase als auch in Lösungen bzw. Dispersionen erfolgen. Damit wird erreicht, dass im Vergleich zu den metallorganischen Nanopartikeln die Partikelgröße und die enge Teilchengrößenverteilung nahezu .unverändert bleiben und die Metalloxid-Nanopulver eine perfekte Kristallinität sowie eine sphärische Teilchenmorphologie aufweisen. Mit der letztgenannten Eigenschaft ist eine nur geringe abrasive Wirkung des Feinstpulvers auf kommerzielle Beschichtungsanlagen verbunden. So treten Kratzspuren auf Walzen und Rakeln erst nach mehrmonatiger Fahrweise auf.

Wesentliche Eigenschaften sind somit: eine sphärische Partikelmorphologie (abgerundete Teilchenoberflächen ohne Kristallit-Kanten), eine enge Partikelgrößenverteilung (im Bereich von 5 bis 50 nm), eine perfekte Kristallinität (ohne Fremdphasen und amorphe Anteile) sowie hydrophile oder hydrophobe (und damit polare oder apolare) Oberflächeneigenschaften.

Es ist weiterhin bevorzugt, dass durch den gezielten Einsatz hydrophiler bzw. hydrophober Liganden in den metallorganischen Nanopartikeln
die Metalloxid-Nanopulver ausgeprägte hydrophile oder hydrophobe Oberflächeneigenschaften erhalten.
Damit wird erreicht, dass die Metalloxid-Nanopulver als Füllstoffe sowohl für hydrophile als auch hydrophobe (und damit polare oder apolare) Polymere eingesetzt werden können.

Die Aufgabe der Erfindung wird außerdem durch ein polymeres Komposit gemäß den Merkmalen des Anspruchs 6 gelöst.

Die Unteransprüche 7 bis 10 zeigen vorteilhafte Ausgestaltungen des erfindungsgemäßen polymeren Komposits auf, ohne diese abschließend zu beschreiben.

Es ist diesbezüglich bevorzugt, dass die Metalloxid-Nanopulver zusätzlich in die im P1 (im dortigen Anspruch 5) beschriebenen metallorganischen Nanodispersionen, die neben Nanopulver zumindest reaktive organische Matrices enthalten, eindispergiert werden.
Damit wird erreicht, dass im Vergleich zu den im P1 (im dortigen Anspruch 7) beschriebenen polymeren Kompositen (Nano/Mikro-Hybridkomposite) die Diamantritzhärte und Mikrohärte der ausgehärteten Kompositbeschichtungen um 1.5 N bzw. 30 N/mm² erhöht werden. Auch viskoelastische Kenngrößen wie z.B. Speichermodul und Glasübergangstemperatur werden um typisch 1.1 GPa bzw. 25 °C angehoben.

Bevorzugt ist weiterhin, dass die Metalloxid-Nanopulver zusätzlich in die im P1 beschriebenen polymeren Komposite
(metallorganisch/anorganische Nano/Mikro-Hybriddispersionen) eindispergiert werden.
Damit wird erreicht, dass die Abriebfestigkeit der ausgehärteten Kompositbeschichtungen im Vergleich zu den im P1 (im Anspruch 7) beschriebenen polymeren Kompositen (Nano/Mikro-Hybridkomposite) um bis zu einem Faktor 2 erhöht wird.

Die Aufgabe der Erfindung wird außerdem durch ein polymeres Komposit gemäß den Merkmalen des Anspruchs 11 gelöst.

Erfindungswesentlich ist außerdem, dass die Metalloxid-Nanopulver in polymere bulk-Systeme beispielsweise durch Extrusionsprozesse integriert werden.
Damit wird erreicht, dass im Vergleich zum unmodifizierten bulk-Polymer oberflächenmechanische und viskoelastische Kenngrößen wie z.B. Oberflächenhärte und Martenshärte sowie der Speichermodul um typisch 30 und 15 N/mm² bzw. um 0.4 GPa erhöht werden.

Die Unteransprüche 12 bis 14 zeigen vorteilhafte Ausgestaltungen des erfindungsgemäßen polymeren Komposits auf, ohne diese abschließend zu beschreiben.

Bevorzugt ist, dass das *bulk*-Komposit jeweils 1 bis 80 Ma.% an anorganischem und metallorganischen Nanopulver gemäß der Ansprüche 11 und 12 enthält.

Es ist außerdem bevorzugt, dass das *bulk*-Komposit zusätzlich 1 bis 80 Ma.% an anorganischen Mikropartikeln mit einer mittleren Teilchengröße der Partikel von 1-2000 µm gemäß des Anspruch 13 enthält.

Weiterhin wird die Aufgabe der Erfindung durch ein Verfahren zur Herstellung eines erfindungsgemäßen anorganischen Metalloxid-Nanopulver und Metallmischoxid-Nanopulver gemäß den Merkmalen des Anspruchs 15 gelöst.

Weiterhin wird die Aufgabe der Erfindung durch Verfahren zur Herstellung eines polymeren Komposits gemäß den Merkmalen der Ansprüche 18, 19 und 21 gelöst.

Die Unteransprüche 16, 20 bis 22 zeigen vorteilhafte Ausgestaltungen der erfindungsgemäßen Verfahren zur Herstellung polymerer Komposite auf, ohne diese abschließend zu beschreiben.

### Pulverpräparationen:

### Beispiel 1:

In einem im Vergleich zu P1 verbesserten Syntheseverfahren werden in einem beheizbaren 21 - Rührreaktor mit systemintegriertem Flügelrührer (Rotationsgeschwindigkeit typisch 200 U/min), Ultraturrax (Rotationsgeschwindigkeit typisch 24000 U/min) und Dimroth-Kühler 1.9 mol Aluminiumtriisopropoxid und 1.3 Isopropanol vorgelegt und unter kombiniertem Rühren bis zum Sieden (82 °C) erhitzt. Nach vollständiger Auflösung des Isopropoxides wird mit einer Schlauchpumpe (Dosiergeschwindigkeit typisch 3 ml/min) eine Lösung von 0.95 mol Maleinsäure in 180 ml Wasser zugetropft.
Dabei fällt sukzessive in quantitativer Ausbeute ein basisches Aluminiummaleat - Bis-Dihydroxyaluminium-maleat - aus (im weiteren mit Almal bezeichnet), dass gegenüber dem im P1 (dortiges Beispiel 1) beschriebenen Produkt einen weitaus geringeren Hang zur Agglomeration aufweist.
Nach weiteren 60 min Nachreaktion unter Rückfluss und kombiniertem Rühren wird auf Raumtemperatur abgekühlt und das Lösemittelgemisch in einem Rotationsverdampfer unter vermindertem Druck vom Almal - Nanopulver abdestilliert. Eine anschließende Temperung des Nanopulvers im Wärmeschrank (24 h 120 °C) führt zu einer nahezu vollständigen Entfernung von adsorbiertem Wasser und Isopropanol.

### Beispiel 2:

Präparation wie Beispiel 1, jedoch Zugabe einer Lösung von 0.95 mol L-(+) - Weinsäure in 180 ml Wasser. Es wird nahezu quantitativ Bis-Dihydroxyaluminium-tartrat - Nanopulver (Altar) erhalten.

### Beispiel 3:

Präparation wie Beispiel 1, jedoch zunächst Zugabe von 155 ml Wasser und danach von 0.475 mol fester Stearinsäure. Es wird nahezu quantitativ ein Gemisch von Aluminiumhydroxid- und Dihydroxyaluminiumstearat - Nanopulver im Molverhältnis 3:1 (Alstear) erhalten.

### Beispiel 4:

Das im Beispiel 1 erhaltene Almal-Nanopulver wird unter der Verwendung von Aluminiumoxid-Tiegeln in einem Hochtemperaturofen unter oxidativer Atmosphäre (Luft) wie folgt beschrieben pyrolysiert: Heizrate 180 °C/h, anschließend 12 h isotherme Fahrweise bei 1100 °C und zuletzt Abkühlen mit 180 °C/h auf Raumtemperatur. Es wird in nahezu quantitativer Ausbeute α-Aluminiumoxid - Nanopulver (im weiteren als Nanokorund - Almal bezeichnet) erhalten.

### Beispiel 5:

Präparation wie Beispiel 4, jedoch unter der Verwendung von Alstear-Nanopulver aus Beispiel 3. Es wird in nahezu quantitativer Ausbeute α-Aluminiumoxid - Nanopulver (im weiteren als Nanokorund - Alstear bezeichnet) erhalten.

### Präparation der Nano/Mikro- und Nano/Nano - Hybriddispersionen:

### Beispiel 6:

Hierbei handelt es sich um eine vergleichende Nano/Mikro-Hybriddispersion gemäß P1.
In einem 250 ml beheizbaren Rührgefäß mit angeschlossenem Labordispermat und Thermostat werden 23.2 g Ebecryl 830, 46.4 g Sartomer 454, 1.75 g DYNASYLAN 6490, 1 g Disperbyk 108 sowie 0.2 g 4 - Hydroxyanisol vorgelegt. Das Gemisch wird 10 min bei 60 °C und 1000 U/min Drehzahl gerührt. Danach gibt man unter fortwährendem Rühren 30 g Almal - Nanopulver (aus Beispiel 1) sowie 18 g Mikrokorund Plakor 15 innerhalb von 30 Minuten zu und steigert die Drehzahl der Rührwelle sukzessive auf 4000 U/min. Man rührt noch ca. 3 Stunden bei 60 °C und 4000 U/min nach, gibt danach 3.0 g Sartomer 297 zu und beseitigt geringe Anteile an Partikelagglomeraten und Partikelaggregaten durch eine einstündige Vermahlung in einer Planetenkugelmühle. Zuletzt werden jeweils 2 g Photoinitiatoren Lucirin TPO-L und Darocur 1173 zugegeben. Man erhält eine milchige und bei Raumtemperatur auf konventionellen Walzenauftragswerken applizierbare Nano/Mikro - Hybriddispersion.

### Beispiel 7:

Präparation wie Beispiel 6, jedoch unter Zugabe von jeweils 9 g Nanokorund - Almal (aus Beispiel 4) und Mikrokorund Plakor 15 anstelle von 18 g Plakor 15. Man erhält eine milchige und bei Raumtemperatur auf konventionellen Walzenauftragswerken applizierbare Nano/Nano/Mikro - Hybriddispersion.

### Beispiel 8:

Präparation wie Beispiel 6, jedoch unter Zugabe von 18 g Nanokorund - Almal (aus Beispiel 4) anstelle von 18 g Plakor 15. Man erhält eine milchige und bei Raumtemperatur auf konventionellen Walzenauftragswerken applizierbare Nano/Nano - Hybriddispersion.

### Präparation der Nano/Mikro- und Nano/Nano - Hybridkomposit-Beschichtungen (Beispiele 6 bis 8):

Die Dispersionen wurden unter der Verwendung von Lackhanteln auf Papiervorimprägnat (Spaltbreite 50 µm) bzw. Glas- und PC-Platten (Spaltbreite 200 µm) mit einem Filmziehgerät aufgetragen. Optional erfolgte eine Nachkondensation durch 10-minütiges Tempern bei 110 °C im Trockenschrank. Die anschließende UV-Härtung wurde mit einer Mitteldruck-Hg-Lampe bei einer Bandgeschwindigkeit von 6 m/min und einer Leistungsdichte von 2 · 120 W/cm vorgenommen. Der O₂-Restgehalt betrug weniger als 200 ppm.

### Präparation der Nano-bulk-Komposite

### Beispiel 9:

In einem gleichläufigen Zweischneckenextruder wurde Polypropylen-Granulat PP DOW H777-25R mit 7.5 Ma.% Nanokorund - Alstear (aus Beispiel 5) bei einer Drehzahl von 450 U/min im Temperaturbereich von 140 bis 160 °C gefüllt. Die Abkühlung der Extrudatstränge erfolgte in einem Wasserbad mit einer Länge von 2000 mm. Im Anschluss wurden die Stränge durch eine Schneidmühle granuliert. Die Fertigung von Schulterstäben gemäß DIN ISO 3167 Typ A (Vielzweckprobekörper) erfolgte auf einer Spritzgussmaschine. Die Versuche wurden im Vollautomatikzyklus durchgeführt.

### Beispiel 10:

Präparation wie Beispiel 9, jedoch unter der Verwendung von Polyamid-Granulat PA6 Miramid® ZH3 sowie Nanokorund-Almal (aus Beispiel 4) und Extrusion im Temperaturbereich von 240 bis 260 °C.

### Verwendete Substrate (für Beispiele 6 bis 8):

Papiervorimprägnat; Masa
Abriebprüfung CS-17 und CS-0/S-42
Glasplatten 100 · 100 · 3 mm³; Simona
DMTA
Polycarbonat-Platten 100 · 100 · 3 mm³; Simona Mikroindentermessungen, Diamant-Ritzhärte

### Verwendete Chemikalien:

Aluminiumtriisopropoxid; Alfa Aesar
Isopropanol; Fluka
Maleinsäureanhydrid; Fluka
L(+)-Weinsäure; Sigma-Aldrich
Stearinsäure; Alfa Aesar
- Ebecryl 830:: hexafunktionelles Polyesteracrylat; Cytec Surface Specialties
- Sartomer 454:: ethoxyliertes Trimethylolpropantriacrylat; Sartomer
- Sartomer 297:: 1.3-Butandioldimethacrylat; Sartomer
- DYNASYLAN 6490:: oligomeres Vinylmethoxysilan; Degussa
- Disperbyk 108:: Netz- und Dispergieradditiv; Byk-Chemie
- Lucirin TPO-L:: Photoinitiator (Monoacyl-phosphinoxid); BASF
- Darocur 1173:: Photoinitiator (α-Hydroxyketon); Ciba
- Plakor 15:: Mikrokorund-Pulver (15 µm) ; ESK-SIC
- PP DOW H777-25R:: Polypropylen-Granulat; DOW
- PA6 Miramid® ZH3:: Polyamid 6-Granulat; BASF Leuna

### Verwendete Analysenmethoden:

- Elektronenmikroskopische Aufnahmen mit Zeiss Ultra 55 FEG-SEM - Gerät (Carl Zeiss SMT) bei einer Kathodenspannung von 800 eV
- Partikelgrößenbestimmung mit Scheibenzentrifuge DC 24000 (LOT-ORIEL GmbH & Co. KG) bei einer Rotationsgeschwindigkeit der Scheibe von 24000 U/min
- XRD - Messungen mit XRD 300 System (Seifert) unter der Verwendung von Cu Kα - Röntgenstrahlung
- XPS - Messungen mit ESCALAB 220iXL Spektrometer (Vacuum Generators) unter der Anwendung von Al Kα - Röntgenstrahlung im Hochvakuum bei 2 ·10⁻⁸ Torr
- Abriebprüfung mit Taber-Abraser (Taber Industries); 2 Reibrollen CS-17 bzw. CS-0 (hier belegt mit Korund-Schmirgelpapier S-42) und jeweils 2 · 500 g Zusatzgewicht
   gravimetrische Bestimmung des Abriebes von 0 bis maximal 4000 U aller 400 U (CS-17), bzw. aller 50 U bis 200 U (CS-0/S-42), danach optional aller 50 oder 200 U bis maximal 1000 U; nach jeweils 200 U neues Schmirgelpapier S-42
- Diamantritzhärte mit Erichsen-Testgerät Typ 413 (Erichsen GmbH) Messungen im Kraftbereich F 0.5 - 6.0 N; Schrittweite ΔF 0.5 N
- Mikroindenter-Messungen mit Fischerscope H100C (Fischer) insbesondere Bestimmmung von Martens-Härte, Speichermodul und maximaler Eindringtiefe der Diamantspitze unter der Kraft F = 100 mN (Acrylat-Kompositbeschichtungen) bzw. 1000 mN *(bulk-*Komposite) über 20 s
- DMTA mit DMA7e (Perkin Elmer)
   mit angelegten statischen und dynamischen Erregerkräften von 200 mN bei einer Frequenz von 1 Hz im Temperaturbereich von 25 bis 250 °C. Insbesondere Bestimmung des Speichermodul E' und der Glasübergangstemperatur T_{g}

Es zeigen:
- Fig.1: FEG-SEM - Aufnahmen der metallorganischen und anorganischen Nanopartikel gemäß Beispiel 1 und 4,
- Fig.2: Partikelgrößenverteilungen der metallorganischen und anorganischen Nanopartikel gemäß Beispiel 1 und 4,
- Fig.3: XRD-Reflexe der metallorganischen und anorganischen Nanopartikel gemäß Beispiel 1 und 3,
- Fig.4: XPS-Spektren der metallorganischen und anorganischen Nanopartikel gemäß Beispiel 1, 3, 4 und 5,
- Fig.5: Taber-Abraser-Tests mit Reibrollen CS-17 zur Bestimmung der Abriebfestigkeit von Nano/Nano-, Nano/Mikro- und Nano/Nano/Mikro-Hybridkompositen auf Acrylatbasis ohne Temperung,
- Fig.6: Taber-Abraser-Tests mit Reibrollen CS-17 zur Bestimmung der Abriebfestigkeit von Nano/Nano-, Nano/Mikro- und Nano/Nano/Mikro-Hybridkompositen auf Acrylatbasis mit Temperung,
- Fig.7: Taber-Abraser-Tests mit Reibrollen CS-0/S-42 zur Bestimmung der Abriebfestigkeit von Nano/Nano-, Nano/Mikro- und Nano/Nano/Mikro-Hybridkompositen auf Acrylatbasis ohne Temperung,
- Fig.8: Taber-Abraser-Tests mit Reibrollen CS-0/S-42 zur Bestimmung der Abriebfestigkeit von Nano/Nano-, Nano/Mikro- und Nano/Nano/Mikro-Hybridkompositen auf Acrylatbasis mit Temperung,
- Fig.9: Bestimmung der Diamantritzhärte von Nano/Nano-, Nano/Mikro- und Nano/Nano/Mikro-Hybridkompositen auf Acrylatbasis,
- Fig.10: Mikroindenter-Messungen von Nano/Nano-, Nano/Mikro- und Nano/Nano/Mikro-Hybridkompositen auf Acrylatbasis,
- Fig.11: DMTA-Messungen von Nano/Nano-, Nano/Mikro-und Nano/Nano/Mikro-Hybridkompositen auf Acrylatbasis, und
- Fig.12: Mikroindenter-Messungen von *bulk-*Nanokompositen auf Polypropylen- und Polyamid-Basis.

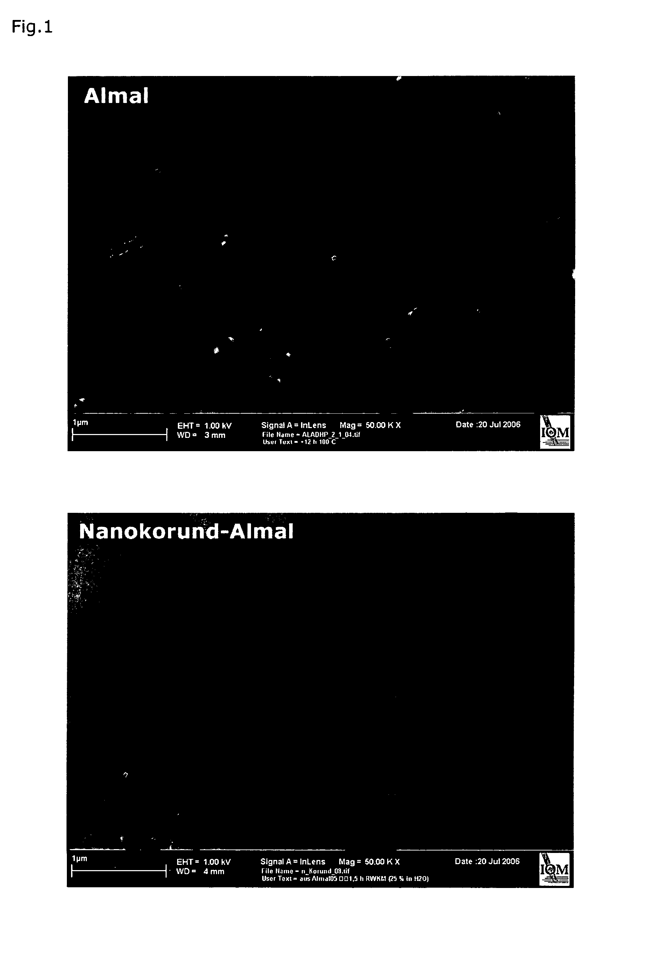

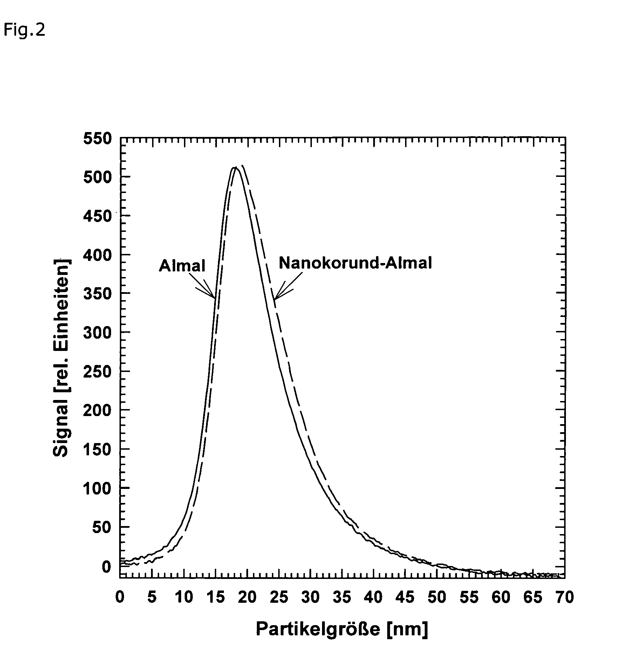

Aus den FEG-SEM - Aufnahmen in Fig.1 geht überraschenderweise hervor, dass der aus dem Metallcarboxylat-Precursor Almal (oberes Bild; Beispiel 1) resultierende Nanokorund-Almal (Beispiel 4) im Vergleich zum Ausgangsmaterial eine nahezu identische Größe unter Erhalt der engen Größenverteilung und der sphärischen Oberflächenmorphologie aufweist. Die sichtbaren Teilchen einer mittleren Größe von ca. 100 nm sind aber ganz offensichtlich nicht die Primärpartikel, wie es die detaillierteren Aussagen unter Anwendung der CPS-Scheibenzentrifuge in Fig.2 zeigen. Demnach liegt das Maximum der mittleren Primärteilchengröße bei ca. 18 nm mit einer Größenverteilung von ca. 5 bis 50 nm, wobei die Untersuchungen an den komplementären Partikeln Alstear (Beispiel 3) und Nanokorund-Alstear (Beispiel 5) analoge Befunde erbrachten.

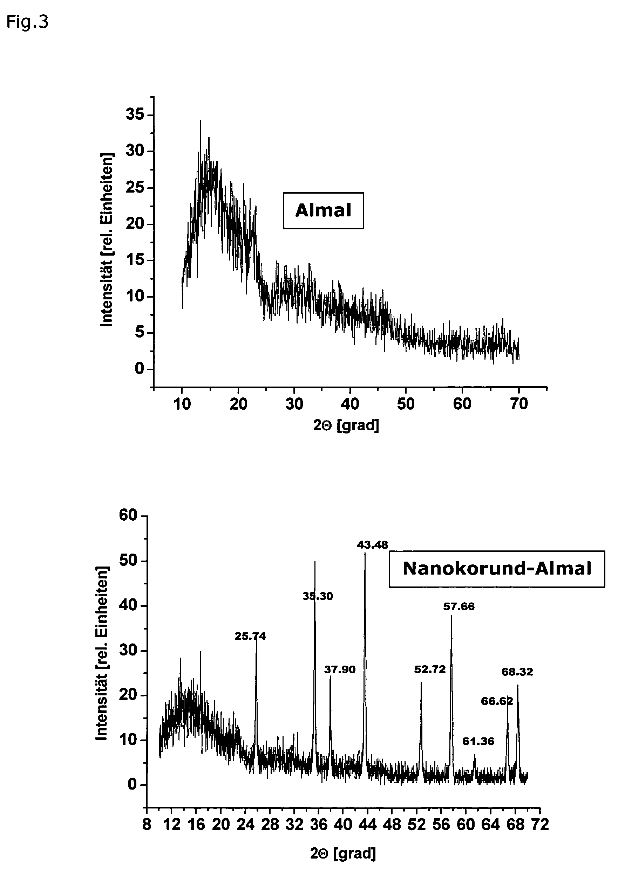

Die röntgendiffraktometrischen Messungen in Fig.3; unteres Bild zeigen gegenüber dem amorphen Almal-Precursor eine perfekte Kristallinität der Nanokorund-Almal - Partikel ohne Fremdphasen und amorphe Anteile. Und wiederum ergaben die Untersuchungen an den Alstear- und Nanokorund-Alstear - Feinstpulvern vergleichbare Resultate.

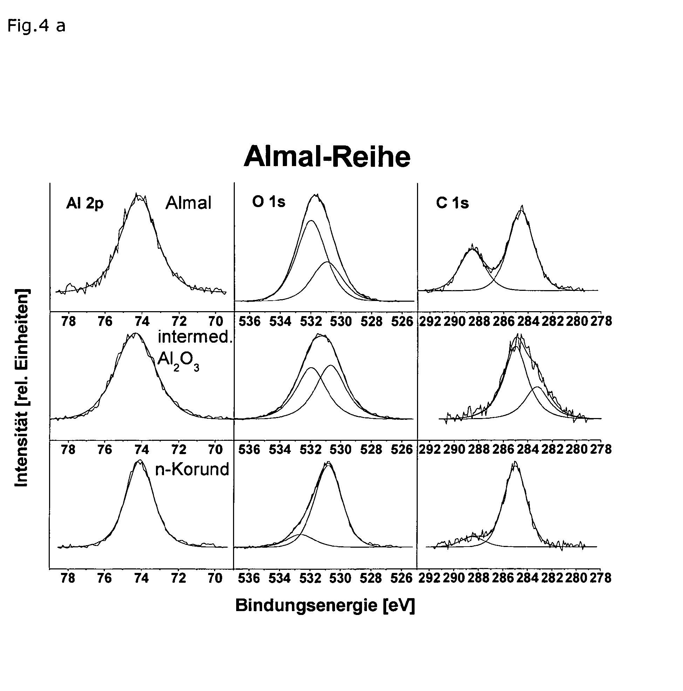

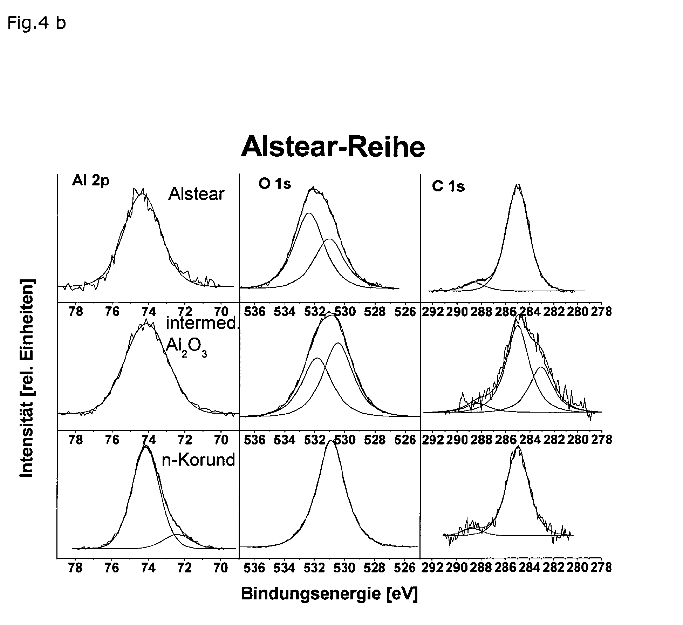

Die XPS-Untersuchungen in Fig.4 ermöglichen detaillierte Aussagen bezüglich der Bindungszustände an den Teilchenoberflächen und wurden an den metallorganischen Precursoren, den intermediär durch Temperung bei 800 °C erhaltenen amorphen Aluminiumoxid-Partikeln und an den Nanokorund-Feinstpulvern (Pyrolysetemperatur 1100 °C) vorgenommen. Von besonders hohem Informationsgehalt sind dabei die Al 2p- und O 1s-Spektren.
Die Halbwertsbreite der Al 2p-Spektren der Almal-Reihe im oberen Teil von Fig.4 verändert sich von 2.2 eV über 2.6 eV auf 1.7 eV. Sie ist also im Spektrum von Nanokorund-Almal bedingt durch reduzierte lokale Aufladung signifikant verringert. Daraus folgt, dass eine geringere Größe der Partikelaggregate vorliegen muss. Die O 1s-Spektren können mit zwei Komponenten gefittet werden: oxidische (Bindungsenergie 530.9 eV über 530.8 eV auf 530.7 eV) und hydroxidische (Bindungsenergie 532.0 eV über 532.6 eV auf 532.0 eV). Letztere ist im Ausgangsmaterial Almal enthalten und wird bei den getemperten Proben unter anschließendem Luftkontakt durch adsorbierte Hydroxygruppen hervorgerufen. Darüber hinaus ist dieser hydroxidische Anteil im Spektrum von Nanokorund-Almal deutlich verringert (Faktor 4-6 im Vergleich zum Almal bzw. intermediären Aluminiumoxid). Auch das weist auf kleinere Partikelaggregate hin, an die sich offenbar weniger OH-Gruppen aus der Luft anlagern können.

Trotzdem handelt es sich bei Nanokorund-Almal um ein Material mit hydrophilen und damit polaren Partikeloberflächen.
Während die Al 2p-Spektren der Alstear-Reihe im unteren Bild von Fig.4 gegenüber der Almal-Reihe vergleichbare Befunde ergeben, besteht die Besonderheit des O 1s-Spektrums von Nanokorund-Alstear darin, dass keine hydroxidische Komponente nachweisbar ist. Dies ist ein eindeutiges Indiz auf hydrophobe und damit apolare Oberflächeneigenschaften des Nanokorundes, so dass bezüglich der Alstear-Ausgangsprobe mit apolarem langkettigen Ligand gewissermaßen ein "Memory-Effekt" zu verzeichnen ist. Dieses Verhalten ist bei oxidischen Materialien sehr selten und eröffnet die Möglichkeit zur Integration von Nanokorund-Alstear in hydrophobe und damit apolare Polymere wie z.B. Polypropylen oder Polyethylen.

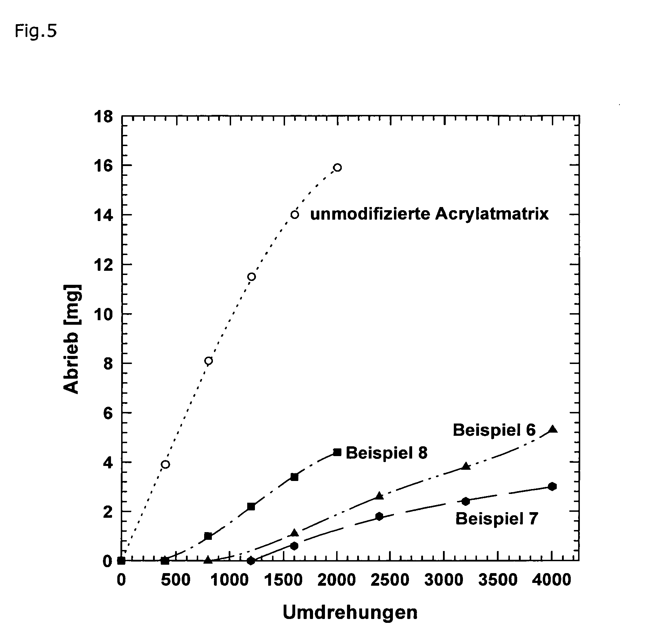

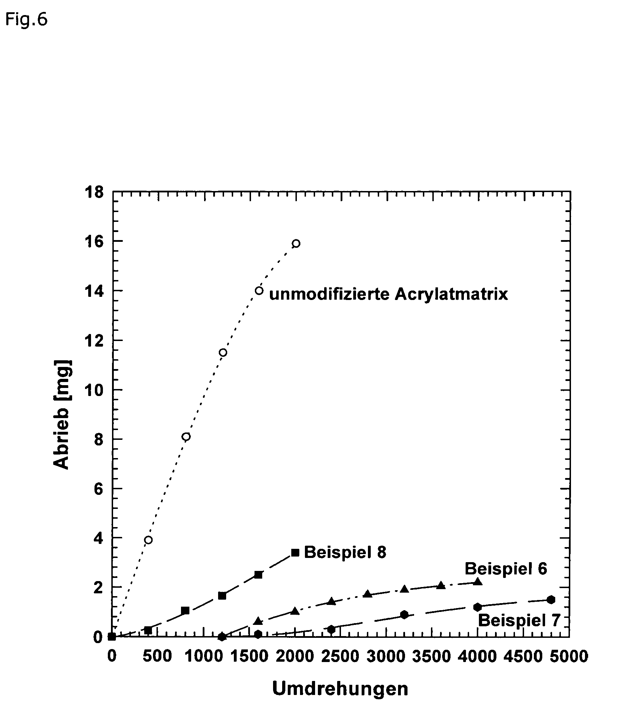

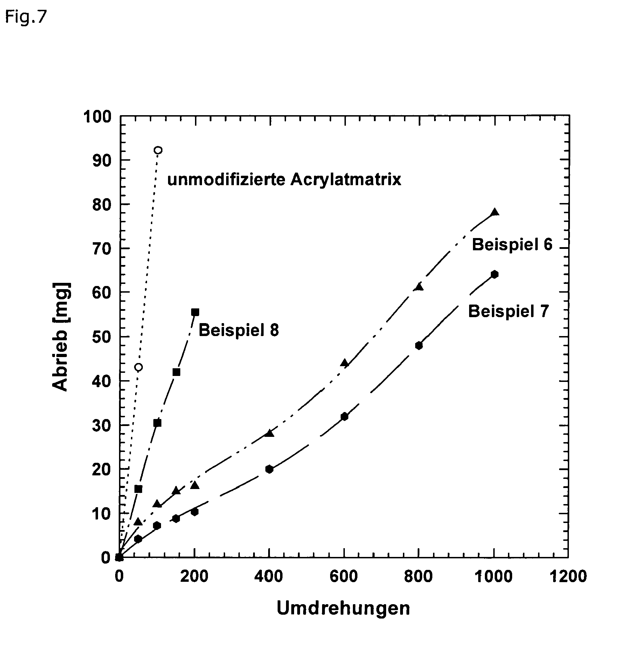

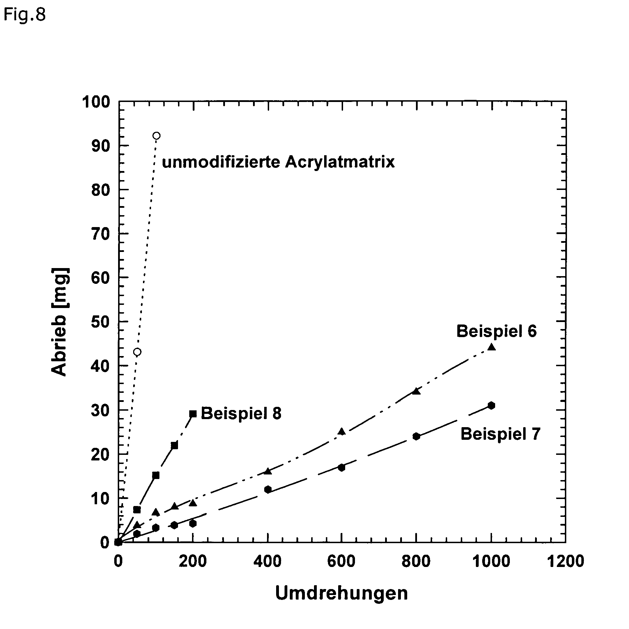

Die Vorteile der erfindungsgemäßen zusätzlichen Füllung der gehärteten Komposite mit Nanokorund im Vergleich zu den im P1 (im Anspruch 7) beschriebenen Nano/Mikro-Hybridkompositen (Stand der Technik, hier Beispiel 6) zeigen sich beispielsweise anhand der Abriebfestigkeit gegenüber den mild wirkenden Reibrollen vom Typ CS-17, dargestellt in Fig.5. Während eine zusätzliche Füllung des Almal-Nanokomposites mit 15 Ma.% Nanokorund-Almal (Beispiel 8) im Vergleich zum Stand der Technik (Nano/Mikro-Hybridkomposit mit 15 Ma.% Mikrokorund Plakor 15 gemäß Beispiel 6) zu einer deutlichen Verschlechterung der Abriebfestigkeit führt, ist durch eine kombinierte Füllung mit jeweils 7.5 Ma.% Nanokorund-Almal und Mikrokorund Plakor 15 im Beispiel 7 eine Verminderung des Abriebes etwa um einen Faktor 2 zu verzeichnen. Es handelt sich also um einen synergetischen Nano/Nano/Mikro-Modifizierungseffekt. Eine weitere Verbesserung der Abriebfestigkeit mit analogem synergetischen Effekt tritt erwartungsgemäß aufgrund der im P1 (im Anspruch 16) beschriebenen thermisch induzierten Nachkondensationsreaktionen durch eine 10-minütige Temperung der Dispersionen bei 110 °C vor der Aushärtung ein (siehe hierzu Fig.6).
Und schließlich übertragen sich die Befunde auch auf den extrem abrasiv wirkenden Taber-Test mit Reibrollen CS-O/Schmirgelpapier S-42 ohne und mit thermisch induzierter Nachkondensation in Fig.7 bzw. 8. So sind im Falle des leistungsfähigsten Nano/Nano/Mikro-Hybridkomposites (Beispiel 7 in Fig.8) zum Abrieb von etwa einem Drittel der Beschichtung 1000 Umdrehungen der Prüfscheibe nötig.

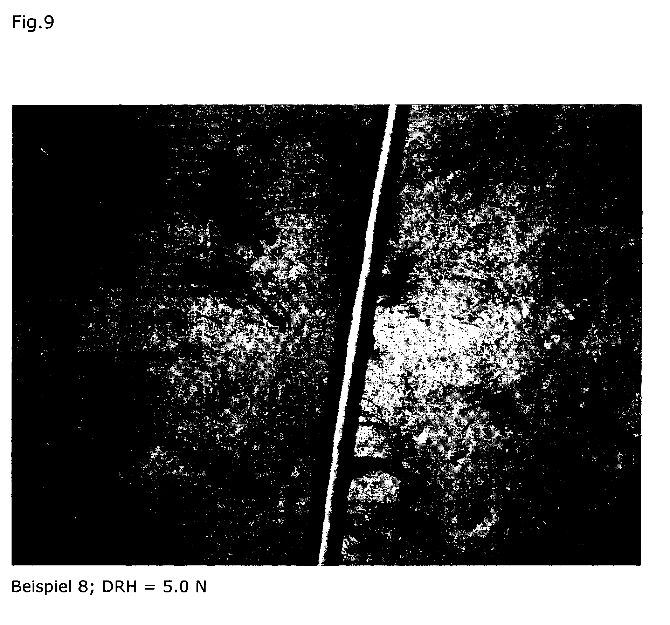

Die Vorteile der erfindungsgemäßen zusätzlichen Füllung der gehärteten Komposite mit Nanokorund im Vergleich zu den im P1 (im Anspruch 7) beschriebenen Nano/Mikro-Hybridkompositen (Stand der Technik; hier Beispiel 6) zeigen sich beispielsweise anhand der Diamant-Ritzhärte DRH von Beispiel 8, dargestellt in Fig.9. Der DRH ist dabei die Druckkraft der Diamantspitze zuzuordnen, bei der ein irreversibles "fischgrätenartiges" Schädigungsmuster der Beschichtung gerade noch nicht auftritt.

Veranschaulichung der Diamantritzhärte (DRH) für KompositBeschichtungen:

| | |
|---|---|
| unmodifizierte Matrix von Beispiel 6, 7 und 8: | 1.5 N |
| Beispiel 6 (P1): | 3.5 N |
| Beispiel 7 (MOP): | 4.0 N |
| Beispiel 8 (MOP): | 5.0 N |

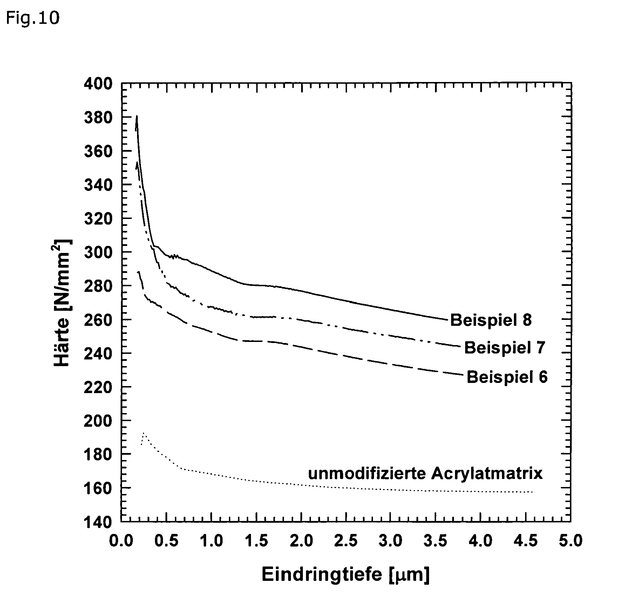

Im Gegensatz zu den Abriebuntersuchungen handelt es sich hier also um einen synergetischen Nano/Nano-Modifizierungseffekt durch zusätzliche Füllung des Almal-Nanokomposites mit 15 Ma.% Nanokorund-Almal. Interessanterweise wird durch eine alleinige Füllung der polymeren Acrylatmatrix mit 15 Ma.% Korund-Nanopulver bereits eine Ritzhärte von 3.0 N erreicht.
Die Vorteile der erfindungsgemäßen zusätzlichen Füllung der gehärteten Komposite mit Nanokorund im Vergleich zu den im P1 (im Anspruch 7) beschriebenen Nano/Mikro-Hybridkompositen (Stand der Technik; hier Beispiel 6) zeigen sich beispielsweise anhand von Mikroindenter-Messungen, dargestellt in Fig.10.
Diese Untersuchungen erlauben insbesondere die Bestimmung der Kenngrößen Martenshärte MH (Härte bei maximaler Eindringtiefe dₘₐₓ der Diamant-Spitze), Speichermodul E' und maximaler Eindringtiefe aus den Primärdaten. In Vergleich zu den Messungen der Diamant-Ritzhärte zeigt sich ein analoger Gang.
Im Vergleich zur unmodifizierten Acrylatbeschichtung wird das gesamte Härteprofil um ca. 90 N/mm² (Beispiel 6; P1), 105 N/mm² (Beispiel 7; MOP) bzw. ca. 120 N/mm² (Beispiel 8; MOP) angehoben. Auch die aus den Messungen erhaltenen Speichermoduli E' (in GPa) bestätigen die bisherigen Befunde:

| | |
|---|---|
| ungefüllte Matrix: | 2.3 |
| Beispiel 6 (P1): | 3.6 |
| Beispiel 7 (MOP): | 4.2 |
| Beispiel 8 (MOP): | 4.7 |

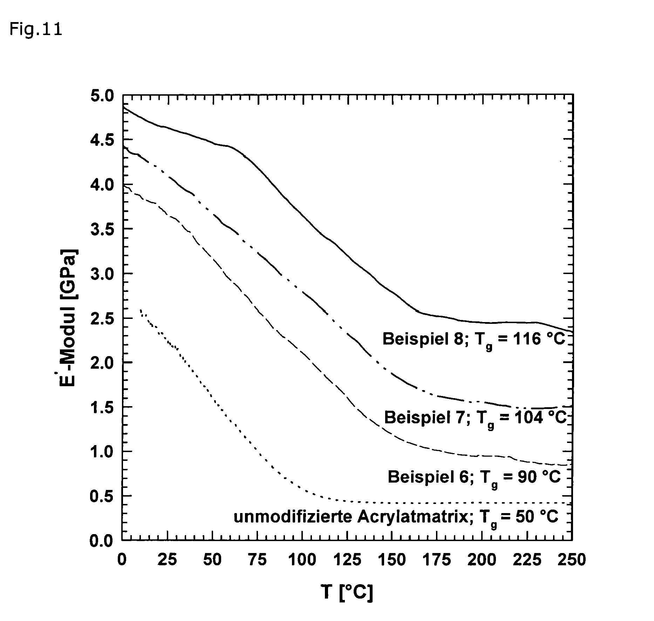

Die Vorteile der erfindungsgemäßen zusätzlichen Füllung der gehärteten Komposite mit Nanokorund im Vergleich zu den im P1 (im Anspruch 7) beschriebenen Nano/Mikro-Hybridkompositen (Stand der Technik; hier Beispiel 6) zeigen sich beispielsweise anhand von DMTA-Messungen, dargestellt in Fig.11. Gegenüber der unmodifizierten Acrylatmatrix wird im Falle des leistungsfähigsten Nano/Nano-Hybridkomposites (Beispiel 8 in Fig.11) das mechanische Dispersionsgebiet (und somit die Glasübergangstemperatur T_{g}) um über 60 °C nach oben verschoben. Damit ist eine stark ausgeprägte Erhöhung des Speichermodulus E' über den gesamten vermessenen Temperaturbereich verbunden.

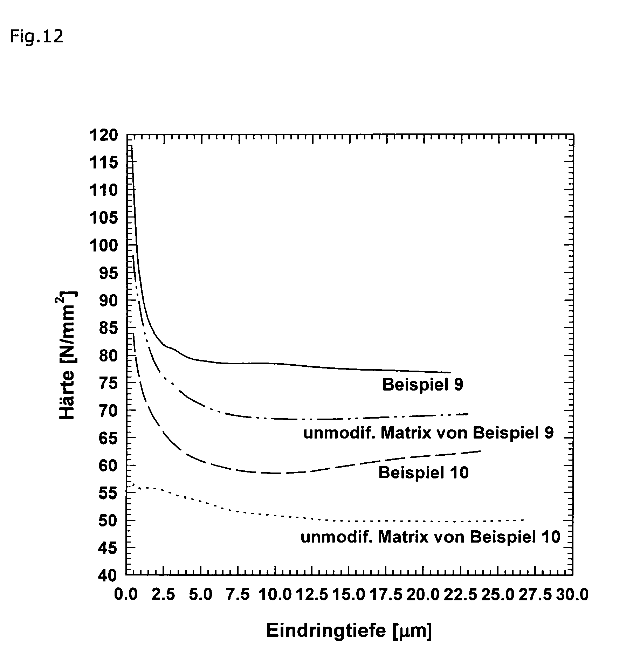

Die Vorteile der erfindungsgemäßen Füllung von *bulk*-Polymeren mit Nanokorund zeigen sich beispielsweise anhand von Mikroindenter-Messungen, dargestellt in Fig. 12. Im Vergleich zum unmodifizierten Polypropylen werden durch einen Anteil von nur 7.5 Ma.% Nanokorund-Alstear (Beispiel 9) die maximale Oberflächenhärte MOH sowie die Martenshärte MH um ca. 18 bzw. 8 N/mm² erhöht. Noch ausgeprägtere Modifizierungseffekte wurden beim komplementären Polyamid-Nanokomposit (Beispiel 10; gefüllt mit 7.5 Ma.% Nanokorund-Almal) mit einer Anhebung der MOH und MH um ca. 28 bzw. 13 N/mm² gefunden.

Auch die aus den Messungen erhaltenen Speichermoduli E' (in GPa) bestätigen die erhaltenen Befunde:

| | |
|---|---|
| ungefüllte Matrix von Beispiel 9: | 1.5 |
| Beispiel 9: | 1.8 |
| | |
| ungefüllte Matrix von Beispiel 10: | 1.0 |
| Beispiel 10: | 1.4 |

## Patentansprüche

1. Anorganische Metalloxid- und Metallmischoxid-Nanopulver mit sphärischer Partikelmorphologie und der Zusammensetzung
**MeᵢOⱼ**
mit i = 1-3 und j = 1 - 7;
wobei die Metallatome Me den ersten fünf Hauptgruppen, den acht Nebengruppen oder den Lanthanoiden entstammen.

2. Nanopulver gemäß Anspruch 1, **dadurch gekennzeichnet, dass** die mittlere Primärteilchengröße der Partikel im Bereich von ca. 1 bis 300 nm liegt.

3. Nanopulver gemäß der Ansprüche 1 und 2, **dadurch gekennzeichnet, dass** dessen Herstellung aus Nanopulver mit der Zusammensetzung
**MeᵢOⱼ(OH)ₖ[(OOC)ₗ-Rₘ]ₙ**
mit i=1-20, j=0-40, k=0-80, l=1-80, m=1-80, n=0-80;
wobei die Metallatome Me den ersten fünf Hauptgruppen, den acht Nebengruppen oder den Lanthanoiden entstammen,
R Wasserstoffatome und/oder beliebige organische Reste sind und
diese Wasserstoffatome und/oder diese organischen Reste miteinander kombinierbar sind, wobei im Partikelkern und an der Partikeloberfläche des Nanopulvers Liganden (OOC)ₗ-Rₘ vorhanden sind und
im Partikelkern und an der Partikeloberfläche das Molverhältnis Me : (OOC)ₗ-Rₘ) im Bereich von 20 : 1 bis 1 : 4 liegt, durch pyrolytische Prozesse erfolgt und die pyrolytischen Prozesse sowohl in fester Phase als auch in Lösung oder in Dispersionen durchgeführt werden.

4. Nanopulver gemäß der Ansprüche 1 bis 3, **dadurch gekennzeichnet, dass** dessen Oberfläche hydrophile oder hydrophobe Eigenschaften aufweist und damit polar oder apolar ist.

5. Nanodispersion, zumindest enthaltend ein Nanopulver gemäß der Ansprüche 1 bis 4 und reaktive organische Matrices.

6. Polymeres Komposit, zumindest umfassend Nanopulver mit der Zusammensetzung gemäß den Ansprüchen 1 bis 4 und reaktive organische Matrices.

7. Polymeres Komposit gemäß Anspruch 6, **dadurch gekennzeichnet, dass** das Komposit zusätzlich zumindest 1 bis 80 Ma.% an metallorganischen Nanopartikeln mit der Zusammensetzung
**MeᵢOⱼ(OH)ₖ[(OOC)ₗ-Rₘ]ₙ**
mit i=1-20, j=0-40, k=0-80, l=1-80, m=1-80, n=0-80;
wobei die Metallatome Me den ersten fünf Hauptgruppen, den acht Nebengruppen oder den Lanthanoiden entstammen,
R Wasserstoffatome und/oder beliebige organische Reste sind und
diese Wasserstoffatome und/oder diese organischen Reste miteinander kombinierbar sind, wobei im Partikelkern und an der Partikeloberfläche des Nanopulvers Liganden (OOC)ₗ-Rₘ vorhanden sind und
im Partikelkern und an der Partikeloberfläche das Molverhältnis Me : (OOC)ₗ-Rₘ) im Bereich von 20 : 1 bis 1 : 4 liegt, enthält.

8. Polymeres Komposit gemäß Anspruch 7, **dadurch gekennzeichnet, dass** das Komposit zusätzlich 1 bis 80 Ma.% an anorganischen Mikropartikeln mit einer mittleren Teilchengröße der Partikel von 1-2000 µm enthält.

9. Polymeres Komposit gemäß der Ansprüche 6-8, **dadurch gekennzeichnet, dass** das Komposit durch Einwirkung von Elektronen, durch UV-Strahlung oder sichtbarem Licht, von γ-oder Röntgenstrahlung, durch Deposition mechanischer Energie, unter zusätzlichen Einsatz von radikalischen und/oder ionischen Photoinitiatoren, oder von thermischer Energie, besonders bevorzugt unter zusätzlichem Einsatz von radikalischen Thermoinitiatoren und/oder Katalysatoren erhalten wird.

10. Polymeres Komposit gemäß der Ansprüche 6-9, **dadurch gekennzeichnet, dass** das Komposit durch *bulk*-Polymerisation, und/oder -Polyaddition und/oder- Polykondensation, Suspensions-Polymerisation und/oder -Polyaddition und/ oder-Polykondensation, Emulsions-Polymerisation und/oder - Polyaddition und/ oder- Polykondensation oder durch eine Polymerisation und/oder Polyaddition und/ oder Polykondensation in Lösung erhalten wird.

11. Polymeres Komposit zumindest umfassend Nanopulver mit der Zusammensetzung gemäß der Ansprüche 1 bis 4 und polymere *bulk*-Materialien.

12. Polymeres Komposit gemäß Anspruch 11, **dadurch gekennzeichnet, dass** das Komposit zusätzlich 1 bis 80 Ma.% an metallorganischen Nanopartikeln mit der Zusammensetzung
**MeᵢOⱼ(OH)ₖ[(OOC)ₗ-Rₘ]ₙ**
mit i=1-20, j=0-40, k=0-80, l=1-80, m=1-80, n=0-80;
wobei die Metallatome Me den ersten fünf Hauptgruppen, den acht Nebengruppen oder den Lanthanoiden entstammen,
R Wasserstoffatome und/oder beliebige organische Reste sind und
diese Wasserstoffatome und/oder diese organischen Reste miteinander kombinierbar sind, wobei im Partikelkern und an der Partikeloberfläche des Nanopulvers Liganden (OOC)ₗ-Rₘ vorhanden sind und
im Partikelkern und an der Partikeloberfläche das Molverhältnis Me : (OOC)ₗ-Rₘ) im Bereich von 20 : 1 bis 1 : 4 liegt, enthält.

13. Polymeres Komposit gemäß Anspruch 12, **dadurch gekennzeichnet, dass** das Komposit zusätzlich 1 bis 80 Ma.% an anorganischen Mikropartikeln mit einer mittleren Teilchengröße der Partikel von 1-2000 µm enthält.

14. Polymeres Komposit gemäß der Ansprüche 11 bis 13, **dadurch gekennzeichnet, dass** das Komposit durch Extrusions-, Granulierungs- und Spritzguss-Prozesse erhalten wird.

15. Verfahren zur Herstellung eines Nanopulvers mit einer Zusammensetzung gemäß den Ansprüchen 1 bis 4, wobei die Partikel durch pyrolytische Prozesse in fester Phase, in Lösung oder in Dispersion hergestellt werden.

16. Verfahren gemäß Anspruch 15, **dadurch gekennzeichnet, dass** die Herstellung eines Nanopulvers in einem einstufigen Verfahren oder mit nur einer Synthesestufe erfolgt.

17. Verfahren zur Herstellung einer polymeren Nanodispersion gemäß dem Anspruch 5, wobei zumindest Nanopulver dispergiert wird.

18. Verfahren zur Herstellung eines polymeren Komposits gemäß den Ansprüchen 6 bis 8.

19. Verfahren zur Herstellung eines polymeren Komposits,
wobei das Komposit aus einer Nanodispersion, einer Nano/Nano- oder Nano/Nano/Mikro-Hybriddispersion, die durch Eindispergierung der Nano- und/oder Mikropulver in organische Matrices erhalten wird, durch eine Polymerisation und/oder Polyaddition und/oder Polykondensation erhältlich ist, **dadurch gekennzeichnet, dass** vor und/oder nach der Aushärtung der Nanodispersion eine Temperung erfolgt.

20. Verfahren nach Anspruch 19, **dadurch gekennzeichnet, dass** vor und/oder nach der Polymerisation und/oder Polyaddition und/oder Polykondensation zum Komposit eine Temperung im Bereich von 1 s bei 800 °C bis 156 h bei 30 °C erfolgt, wobei eine Temperung der Dispersionen über ca. 10 min bei ca. 110 °C besonders bevorzugt ist.

21. Verfahren zur Herstellung eines polymeren Komposits gemäß den Ansprüchen 11 bis 14.

22. Verfahren zur Herstellung eines polymeren Komposits gemäß Anspruch 21, **dadurch gekennzeichnet, dass** der Extrusionsprozess bei einer Extruderdrehzahl von 10 bis 6000 U/min und im Temperaturbereich von -100 bis 600 °C durchgeführt wird.
